# EUROPÄISCHE PATENTANMELDUNG

(11) **EP 2 910 429 A1**
(43) Veröffentlichungstag der Anmeldung: **26.08.2015**
(21) Anmeldenummer: 14155675.3
(22) Anmeldetag: 19.02.2014
(51) Int. Cl.: B60R 11/02, A47C 15/00, B60N 2/48, H04R 5/02, H04R 1/02, B64D 11/06, H04M 1/11, H04R 1/08

(54) **Akustikmodul zur Schallabsorption und Verbesserung der Kommunikation**

(71) Anmelder: Fraunhofer-Gesellschaft zur Förderung der angewandten Forschung e.V., 80686 München (DE)
(72) Erfinder: Bauer, Wilhelm, 70195 Stuttgart (DE); Rief, Stefan, 70176 Stuttgart (DE); Schmidt, Michael, 70180 Stuttgart (DE)
(74) Vertreter: Mammel und Maser

(57) **Zusammenfassung**

Die Erfindung betrifft ein Akustikmodul zur Schallabsorption und Verbesserung der Kommunikation, insbesondere in Arbeits- und Büroumgebungen, mit einem flächenförmigen Grundkörper (12), der zumindest eine schallabsorbierende Schicht umfasst, mit zumindest einem an oder in dem Grundkörper angeordneten Mikrofon (20) und Lautsprecher (19), die mit einer Steuerungseinrichtung (22) verbunden sind, mit einer am Grundkörper (14) vorgesehenen Schallabsorptionsebene (25), die trennwandähnlich ausgebildet und beispielsweise zum Kopf des Nutzers ausrichtbar ist. (Hierzu Figur 2)

## Beschreibung

Die Erfindung betrifft ein Akustikmodul zur Schallabsorption und Verbesserung der Kommunikation für einen Nutzer.

In offenen Bürostrukturen, zum Beispiel Open Space Office, werden Konzentrationsfähigkeit, Wohlbefinden und Stressempfinden der Nutzer in hohem Maße durch die akustische Situation bestimmt. Im Zusammenwirken mit Maßnahmen zur visuellen Abschirmung trägt die akustische Abschirmung zur Erzeugung von sogenannter Privatheit bei. Privatheit bedeutet, dass beispielsweise die Bewegung, die Sprache, das Verhalten des einzelnen Nutzers nicht oder nur in geringem Umfang von anderen Nutzern wahrgenommen wird. Aus arbeitsorganisatorischen Anforderungen wird häufig eine räumliche Offenheit angestrebt. Oft spielen auch architektonische oder bautechnische Gründe eine Rolle, die zu offenen und zugleich schallhart ausgebildeten Büroräumen führen. Durch die Zunahme des Spracheintrags, wie beispielsweise durch Webkonferenzen oder Telefonkonferenzen, steigen die akustischen Belastungen.

Zur Optimierung der Raumakustik sind beispielsweise Raumgliederungselemente oder Trennwandsysteme mit schallabsorbierenden Materialien bekannt. Auch werden Schrankelemente mit schallabsorbierenden Oberflächen zur Verbesserung der Raumakustik eingesetzt. Allerdings werden solche Mobiliare rückläufig verwendet, da die Lagerung von Papier basierten Dokumenten aufgrund der modernen Kommunikationstechnologien mehr und mehr zurück geht und offene, kommunikative Büroformen immer mehr bevorzugt werden.

Des Weiteren ist ein Lösungsansatz für eine akustische und visuelle Privatheit für den Benutzer bekannt geworden, welche eine kapuzenhafte Ausbildung von einem oberen Abschluss eines Bürostuhls oder Bürosessels umfasst. Dadurch entsteht eine räumliche Situation für den Nutzer, in der sich dieser akustisch sehr stark selbst wahrnimmt und zugleich vom restlich umgebenden Raum entkoppelt wird. Diese Situation wird von den Nutzern in der Regel als sehr unangenehm empfunden, da auch durch den fehlenden Bezug zur erweiterten Arbeitsumgebung der tatsächliche Grad der akustischen Privatheit für den Nutzer nicht einzuschätzen ist.

Ein weiterer Ansatz zur Optimierung der akustischen Situation in Arbeits- und Büroumgebungen stellt die Nutzung von direkt am Körper getragenen Headsets beziehungsweise einer Sprechgarnitur oder eines Kopfsprechhörers dar. Diese dienen in erster Linie der Erhöhung der Sprachverständlichkeit zum räumlich-entfernten Kommunikationspartner im Rahmen von Telefonaten, Telefon- oder Webkonferenzen. Diese werden vor allem in Callcentern eingesetzt, in denen die Nutzer nahezu permanent über Telefon kommunizieren.

In üblichen Büroarbeitssituationen finden jedoch oftmals spontane, ungeplante Telefonate oder Webkonferenzen statt. Die Nutzer lehnen solche Headsets ab, da diese entweder mit Hilfe eines Bügels direkt am Kopf, am Nacken oder als In-Ear-Lösung angeboten werden und somit entweder permanent direkt am Körper getragen werden müssen oder erst für ein Telefonat angezogen sowie gegebenenfalls justiert werden müssen. Diesem kann dahingehend eine Abhilfe geschaffen werden, indem sogenannte Freisprecheinrichtungen verwendet werden. Bei der Kommunikation über eine Freisprecheinrichtung wird allerdings zusätzlicher Schall und Sprache des räumlich-entfernten Kommunikations-partners über Lautsprecher in die Büroumgebung eingetragen, wodurch wiederum die anderen Bürobenutzer gestört werden.

Der Erfindung liegt deshalb die Aufgabe zugrunde, ein Akustikmodul zu schaffen, welches zum einen eine gewisse Privatheit für den Nutzer schafft und zum anderen eine Optimierung der Raumakustik und des akustischen Empfindens des Nutzers ermöglicht, wobei auch ein angenehmes Telefonieren ermöglicht sein soll, ohne dass ein Kopfsprechhörer permanent am Körper getragen oder erst für ein Telefonat angezogen werden müsste.

Diese Aufgabe wird durch ein Akustikmodul zur Schallabsorption und Verbesserung der Kommunikation, insbesondere Telekommunikation, ermöglicht, welches einen flächenförmigen Grundkörper umfasst, welcher zumindest eine schallabsorbierende Schicht umfasst und zumindest ein in dem Grundkörper angeordnetes Mikrofon und zumindest einen ebenfalls im Grundkörper angeordneten Lautsprecher mit einer damit verbundenen Steuereinrichtung umfasst, wobei der flächenförmige Grundkörper eine Schallabsorptionsebene aufweist, schirmend wirkt und zum Kopf eines Nutzers ausrichtbar ist. Dadurch wird ermöglicht, dass eine Optimierung der akustischen Situation in offenen Büroumgebungen oder Arbeitsumgebungen geschaffen ist. Durch die Ausbildung des physischen Grundkörpers mit einer Schallabsorptionsebene, welche vorzugsweise durch die schallabsorbierende Schicht gebildet ist, wird eine akustische Privatheit des Benutzers gegenüber anderen Störungen in einer offenen Arbeitsumgebung erhöht. Gleichzeitig kann durch die schirmende Ausbildung des Grundkörpers, welche zum Kopf des Benutzers ausgerichtet ist oder ausrichtbar ist, auch eine visuelle Privatheit des Nutzers geschaffen werden. Darüber hinaus ist der Spracheintrag in die Umgebung und somit die Störung von anderen Personen im Raum durch die unmittelbare Nähe des Mikrofons und des Lautsprechers zum telefonierenden Nutzer reduziert. Gleichzeitig kann durch ein solches Akustikmodul das Anziehen und gegebenenfalls Einjustieren von Kopfsprechhörern entfallen. Je mehr Nutzer ein solches Akustikmodul nutzen, umso mehr verbessert sich die akustische Situation von Open Space Office-Strukturen beziehungsweise Großraumbüros.

Bevorzugt ist vorgesehen, dass die absorbierende Schicht als Kern und/oder als Außenhülle des Grundkörpers ausgebildet ist. Bei einer ersten Ausführungsform kann beispielsweise der Grundkörper einen schallabsorbierenden Kern umfassen, wobei die den Kern umgebende Außenhülle beispielsweise schalldurchlässig ist. Dabei kann es sich beispielsweise um eine perforierte Kunststoffhülle handeln, die gut zu reinigen ist. Alternativ kann auch vorgesehen sein, dass die Außenhülle des Grundkörpers schallabsorbierend ist und der Kern des Grundkörpers lediglich die Form des Grundkörpers bildet oder zusätzlich als schallabsorbierendes Element ausgebildet ist oder schallabsorbierendes Material umfasst.

Des Weiteren kann vorgesehen sein, dass der Grundkörper von einer schalldurchlässigen Außenhülle umgeben ist. Dabei wird bevorzugt der Kern des Grundkörpers durch ein schallabsorbierendes Material gebildet. Dies ermöglicht eine hohe Gestaltungsfreiheit für die optisch sichtbare Fläche des Grundkörpers.

Eine weitere bevorzugte Ausgestaltung des Akustikmoduls sieht den zumindest einen Lautsprecher und/oder das zumindest eine Mikrofon in oder auf der Schallabsorptionsebene vor. In Abhängigkeit der Designgestaltung können beispielsweise Lautsprecher und Mikrofon in der Schall-absorptionsebene integriert sein, so dass diese Elemente verdeckt oder integriert sind. Alternativ können auch der Lautsprecher und/oder das Mikrofon bewusst gegenüber der Schallabsorptionsebene hervorgehoben oder auf dieser angebracht sein.

Eine vorteilhafte Ausführungsform der Erfindung sieht vor, dass das Mikrofon und der Lautsprecher in einer Einheit vorgesehen sind. Dadurch kann ein vereinfachter Einbau und Ausgestaltung des Akustikmoduls vorgesehen sein.

Alternativ ist auch möglich, dass zumindest ein Mikrofon getrennt zum zumindest einen Lautsprecher angeordnet ist und dass das Mikrofon dem Mund des Nutzers sowie der Lautsprecher einem Ohr des Nutzers zugeordnet und entsprechend zueinander beabstandet sind. Dadurch können eine weitere Verbesserung der Akustik einerseits und eine Reduzierung im Eintrag von Störgeräuschen in die Umgebung andererseits ermöglicht sein.

Die Steuerungseinrichtung des Akustikmoduls weist bevorzugt ein Funkmodul zur drahtlosen Kommunikation mit einer Datenverarbeitungseinrichtung, insbesondere einem PC, Notebook oder Tablet, oder mit einem Tisch- oder Mobiltelefon auf. Dabei kann das Funkmodul auf bekannte Techniken, wie beispielsweise WLAN, Bluetooth, Nahfeldkommunikation oder dergleichen, zurückgreifen. Alternativ kann auch vorgesehen sein, dass eine kabelgebundene Übertragung möglich ist.

Zur Verbesserung der Kommunikation ist vorteilhafterweise vorgesehen, dass das Mikrofon als Richtmikrofon ausgebildet ist und die Steuerungseinrichtung eine elektronische Steuerung für den Sprach-Frequenz-Bereich und die Nahbesprechung umfasst, um auch Rückkopplungen des Systems zu untersprechen sowie Nebengeräusche und Störgeräusche herauszufiltern. Dadurch kann eine weitere Verbesserung des Akustikmoduls geschaffen werden.

Der Grundkörper des Akustikmoduls weist vorteilhafterweise zumindest ein Bedienelement zur Ansteuerung der Steuerungseinrichtung auf. Dies kann im einfachsten Fall eine Ein-/Aus-Taste sein, wodurch eine Inbetriebnahme der Steuerungseinrichtung erfolgen kann. Das kann des Weiteren beispielsweise ein TouchPad sein. Es können auch mehrere Bedienelemente zur Ansteuerung der Steuerungseinrichtung vorgesehen sein.

Bevorzugt umfasst der Grundkörper Akkumulatoren, so dass eine autarke Benutzung ohne ein Stromkabel möglich ist. Alternativ oder zusätzlich können auch Solarzellen vorgesehen sein, die für die Energieversorgung der Steuerungseinrichtung sowie des Mikrofons und des Lautsprechers sorgen.

Der flächenförmige Grundkörper des Akustikmoduls weist bevorzugt einen Rahmen, eine Gitterstruktur oder einen Wabentragkörper auf. Dadurch können ein leichtes Akustikmodul und eine einfache Integration der elektrischen Komponenten ermöglicht werden.

Bevorzugt ist die schallabsorbierende Außenhülle aus Faserdämmmaterialien, Textilfasern oder dergleichen ausgebildet. Dies ermöglicht zum einen eine hohe Schallabsorption und zum anderen die Ausgestaltung von verschiedenen Designs.

Vorteilhafterweise sind im Grundkörper ein offenporiger Schaum, Faserdämmmaterialien oder Materialien mit Mikroperforation vorgesehen, um die Schallabsorption weiter zu optimieren. Alternativ kann ein Rahmen, eine Gitterstruktur und/oder eine Wabentragstruktur, die Teil eines Kerns des Grundkörpers bilden, mit einem schallabsorbierenden Material ausgefüllt sein. Gemäß einer Ausführung kann zusätzlich noch eine schallabsorbierende Außenhülle angebracht werden. Alternativ kann auch eine schalldurchlässige Außenhülle einen solchen Kern umgeben.

An dem flächenförmigen Grundkörper ist zumindest ein Befestigungselement vorgesehen. Mittels eines solchen Befestigungselementes kann das Akustikmodul beispielsweise an einem Bürostuhl, Bürodrehstuhl oder an einem weiteren Mobiliar befestigbar sein, so dass ein flexibler Einsatz ermöglicht ist. Das Befestigungselement kann zur Befestigung an einer Armlehne, einer Rückenlehne und/oder Nackenstütze vorgesehen sein so dass der flächenförmige Grundkörper beispielsweise einseitig eine Abschirmung bezüglich der Privatheit bildet und gleichzeitig drahtlose Kommunikation möglich ist.

Bei der Dimensionierung des flächenförmigen Grundkörpers des Akustikmoduls ist bevorzugt vorgesehen, dass der Grundkörper eine Kopfgröße des Nutzers angepasste Höhe oder eine größere Höhe aufweist. Die auf die Kopfgröße des Nutzers angepasste Höhe reicht bereits aus, um einerseits eine akustische Abschirmung zu schaffen und dennoch den Nutzer in seiner Privatheit nicht unnötig einzuschränken.

Des Weiteren ist bevorzugt vorgesehen, dass der Grundkörper einen vorderen schmaleren Bereich als einen rückseitigen Bereich umfasst. Dadurch kann eine weitere Optimierung in Gewicht und Größe des Grundkörpers geschaffen werden. Des Weiteren ist vorteilhafterweise vorgesehen, dass ein symmetrischer Aufbau von dem zumindest einen Mikrofon und dem zumindest einen Lautsprecher zur Längsachse des Grundköpers geschaffen ist. Dadurch kann dieses Akustikmodul sowohl zur Abschirmung einer rechten als auch einer linken Seite des Nutzers wahlweise eingesetzt werden.

Eine weitere vorteilhafte Ausgestaltung des Grundkörpers sieht vor, dass dieser zumindest einen schwenkbaren Abschnitt aufweist, in welchem zumindest ein Mikrofon vorgesehen ist. Dadurch kann dieses Mikrofon näher zum Mund herangeführt werden und eine bessere Sprachaufnahme ermöglicht sein. Beispielsweise können auch in einem solch schwenkbaren Abschnitt ein Display und/oder eine Kamera vorhanden sein, so dass Videokonferenzen ermöglicht sind.

Eine bevorzugte Ausführungsform des Grundkörpers sieht vor, dass dieser eine U-förmige Kontur aufweist, wobei vorzugsweise beide Schenkel als schwenkbare Abschnitte ausgebildet sind. In diesen beiden Schenkeln kann das zumindest eine Mikrofon vorgesehen sein. Vorzugsweise sind zumindest ein Lautsprecher und ein Mikrofon eingebracht, so dass der Nutzer entsprechend seiner Bedürfnisse einen Kopf- beziehungsweise Ohrabstand einstellen kann.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1a eine perspektivische Ansicht einer ersten erfindungsgemäßen Ausführungsform des Akustikmoduls,
Figur 1b eine schematische Ansicht von oben auf die erste Ausführungsform des Akustikmoduls gemäß Figur 1a,
Figur 2a eine perspektivische Ansicht einer alternativen Ausführungsform des Akustikmoduls zu Figur 1,
Figur 2b eine schematische Ansicht von oben auf die alternative Ausführungsform des Akustikmoduls gemäß Figur 2a,
Figur 3 eine perspektivische Ansicht einer alternativen Ausführungsform zu Figur 2,
Figur 4 eine weitere alternative Ausführungsform des Akustikmoduls zu Figur 3,
Figuren 5a und 5b eine perspektivische Ansicht einer weiteren alternativen Ausführungsform zu Figur 4 und
Figuren 6a bis 6c schematische Ansichten einer weiteren alternativen Ausführungsform zu Figur 2.

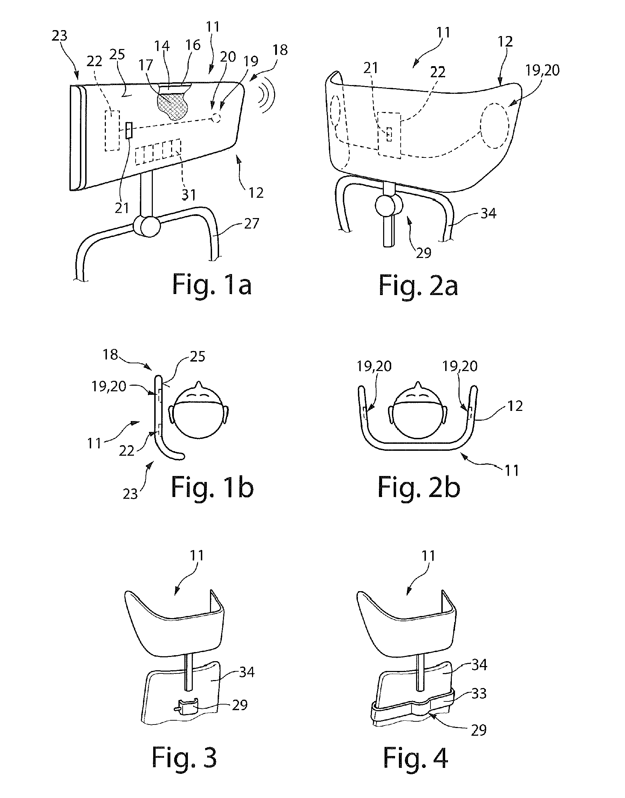

In Figur 1a ist eine perspektivische Ansicht einer ersten erfindungsgemäßen Ausführungsform eines Akustikmoduls 11 dargestellt. Die Figur 1b zeigt eine schematische Ansicht von oben auf das Akustikmodul 11 gemäß Figur 1a. Dieses Akustikmodul 11 umfasst einen flächenförmigen Grundkörper 12, der zumindest eine schallabsorbierende Schicht umfasst. Gemäß einer ersten Ausführungsform kann der Grundkörper 12 einen Rahmen 14 aufweisen, der schallabsorbierende Elemente aufnimmt, wodurch die schallabsorbierende Schicht ausgebildet sein kann und insbesondere als Kern 17 des Grundkörpers 12 vorgesehen ist. Der Rahmen 14 kann beispielsweise als ein umlaufender Rahmen vorgesehen sein, der von einer Außenhülle 16 umgeben ist, die beispielsweise schallabsorbierende Materialien umfasst, insbesondere Textilfasern, Faserdämmmaterialien, Schafschurwolle oder dergleichen. Alternativ kann die Außenhülle 16 auch aus schalldurchlässigen Materialien ausgebildet sein. Bei dem Kern 17 aus schallabsorbierenden Materialien kann es sich um offenporige Schäume, aus Materialien mit Mikroperforationen als auch weiteren Faserdämmmaterialien handeln. Alternativ kann vorgesehen sein, dass die schallabsorbierende Schicht, welche den Kern 17 bildet, ohne einen Rahmen 14 ausgebildet ist, sofern die schallabsorbierenden Materialien eine hinreichende Eigensteifigkeit aufweisen. Alternativ kann für den Rahmen 14 auch eine Gitterstruktur oder Wabenstruktur oder dergleichen vorgesehen sein, wobei die Hohlräume dieser Struktur wiederum mit schallabsorbierenden Materialien ausgefüllt sein können.

Des Weiteren kann alternativ vorgesehen sein, dass ein solcher Rahmen 14 oder eine Gitterstruktur oder Wabenstruktur ohne schallabsorbierende Elemente oder Materialien von einer schallabsorbierenden Außenhülle 16 umgeben ist und die schallabsorbierende Schicht durch diese Außenhülle 16 gebildet ist. Bei den vorgenannten Materialien für die Schallabsorption kann es sich um natürliche und/oder künstlich hergestellte Materialien oder eine Kombination hiervon handeln.

Der flächenförmige Grundkörper 12 weist gemäß dem Ausführungsbeispiel eine länglich rechteckförmige Kontur auf und ist flächenförmig beziehungsweise trennwandähnlich ausgebildet. Der Grundkörper 12 wirkt gegenüber der Umgebung schirmend. In einem vorderen Bereich 18 sind beispielsweise ein Lautsprecher 19 und ein Mikrofon 20 vorgesehen. Im mittleren Bereich des Grundkörpers 12 kann beispielsweise ein Bedienelement 21 vorgesehen sein, welches unmittelbar an einer Steuerungseinrichtung 22 vorgesehen ist oder mit dieser in Verbindung steht. Die Steuerungseinrichtung 22 kann drahtlos oder kabelgebunden an ein Telefon, Mobiltelefon oder eine Datenverarbeitungseinrichtung angebunden sein. Im hinteren Bereich 23 des Grundkörpers 12 kann ein umgebogener Rand vorgesehen sein, der es dem Benutzer ermöglicht, seinen Kopf daran abzustützen. Alternativ kann dieser entfallen, so dass der vordere Bereich 18 und der hintere Bereich 23 optisch gleich ausgebildet sind.

Der flächenförmige Grundkörper 12 umfasst eine Schallabsorptionsebene 25, die in der Außenhülle 16 oder im Kern 17 oder dazwischen liegen kann. Bevorzugt sind in oder benachbart zur Schallabsorptionsebene der zumindest eine Lautsprecher 19 und das zumindest eine Mikrofon 20 vorgesehen. Vorteilhafterweise ist das zumindest eine Bedienelement 21 ebenfalls in dieser Ebene angeordnet, so dass der Benutzer beim Schwenken des Kopfes unmittelbar einen Blick auf das Bedienelement 21 und ein gegebenenfalls vorgesehenes Display der Steuerungseinrichtung 22 im Blick hat. Der Lautsprecher 19 und das Mikrofon 20 sind bevorzugt in der Längsachse des flächenförmigen Grundkörpers 12 vorgesehen, so dass das Akustikmodul 11 beidseitig zum Kopf des Benutzers verwendbar ist.

Das Akustikmodul 11 kann gemäß der in Figur 1a dargestellten Ausführungsform fest mit einer Armlehne 27 oder einer sonstigen Komponente eines nicht näher dargestellten Mobiliars, insbesondere einem Stuhl, angeordnet sein. Alternativ kann dieses in Figur 1 dargestellte Akustikmodul 11 auch Befestigungselemente 29 umfassen, welche in den nachfolgenden Figuren noch näher beschrieben werden, um das Akustikmodul 11 bedarfsweise an der Armlehne, der Rückenlehne oder einem sonstigen Teil des Stuhls anzubringen.

Bevorzugt ist vorgesehen, dass der Lautsprecher 19 und das Mikrofon 20 getrennt zueinander angeordnet sind, um eine verbesserte Sprachaufnahme und einen verringerten Eintrag von Störgeräuschen zu ermöglichen. Der Lautsprecher und das Mikrofon sind bevorzugt durch Kabel mit der Steuerungseinrichtung 22 verbunden. Diese Steuerungseinrichtung kommuniziert vorteilhafterweise drahtlos mit einer nicht näher dargestellten Datenverarbeitungseinrichtung, wie beispielsweise einem PC, Notebook, Tablet oder dergleichen oder mit einem Tisch- oder Mobiltelefon, um beispielsweise auch Web- oder Videokonferenzen durchführen zu können. Zusätzlich weist die Steuerungseinrichtung 22 eine Sensorik auf, um eine angepasste Lautstärke der eingebauten Lautsprecher zu regeln, die in Abhängigkeit von der Übertragungsqualität, von Hintergrundgeräuschen oder sonstigen Störeinflüssen gegeben ist.

Des Weiteren sind in dem Akustikmodul bevorzugt Akkumulatoren 31 zur Energieversorgung der Steuerungseinrichtung 22 sowie des Lautsprechers 19 und des Mikrofons 20 vorhanden.

Die Höhe des flächenförmigen Grundkörpers 12 kann an die eines Kopfes des Nutzers angepasst sein. Die Länge des flächenförmigen Grundkörpers 12 kann zumindest die Kopfgröße umfassen, wobei bevorzugt eine längere Erstreckung vorgesehen ist, um eine verbesserte Schallabsorptionswirkung zur erzielen.

In Figur 2a ist eine perspektivische Ansicht einer alternativen Ausführungsform des Akustikmoduls 11 dargestellt. Die Figur 2b zeigt eine schematische Ansicht von oben auf die alternative Ausführungsform des Akustikmoduls 11 gemäß Figur 1 b. Bei dieser Ausführungsform ist vorgesehen, dass das Akustikmodul 11 sich nicht nur einseitig entlang eines Kopfes des Benutzers erstreckt, sondern beidseitig und in Form einer Kopfstütze ausgebildet ist. Beispielsweise ist ein U-förmiger Rahmen 14 vorgesehen, wobei die beiden seitlichen Endabschnitte des U-förmigen Rahmens 14, 19 und das Mikrofon 20 aufweisen, so dass beidseitig Informationen aufgenommen und wiedergegeben werden können. Der Rahmen 14 kann aus einem biegbaren Material bestehen, so dass die Öffnungsweite der beiden Schenkel des Rahmens 14 flexibel durch den Benutzer einstellbar ist.

Dieses Akustikmodul 11 ist beispielsweise über ein lösbares Befestigungselement 29 mit einer Rückenlehne oder mit einem Gestell am Stuhl verbunden. Bei solchen Befestigungselementen 29 kann es sich um ein einfaches Klicksystem handeln. Ebenso können Deck-, Klemm-, Klebe-, Klett-, Schraubverbindungen, Steck- oder Pressverbindungen, insbesondere pneumatische Pressverbindungen, vorgesehen sein.

In Figur 3 ist eine alternative Ausführungsform zu Figur 2 dargestellt. Diese Ausführungsform weist ein Akustikmodul 11 gemäß Figur 2 auf. Das Befestigungselement 29 ist beispielsweise als Steckelement ausgebildet und kann bezüglich der Höhe in unterschiedlichen Stellungen verrastbar aufgenommen werden.

In Figur 4 ist eine weitere alternative Ausführungsform des Befestigungselementes 29 für das Akustikmodul 11 gemäß Figur 2 dargestellt. Beispielsweise kann an einer Rückenlehne eines Bürostuhls eine Befestigungsmanschette 33 angeklipst werden, so dass darauf folgend das Akustikmodul daran befestigbar und vorteilhafterweise wiederum in der Höhe individuell durch eine entsprechende Verrastung einstellbar ist.

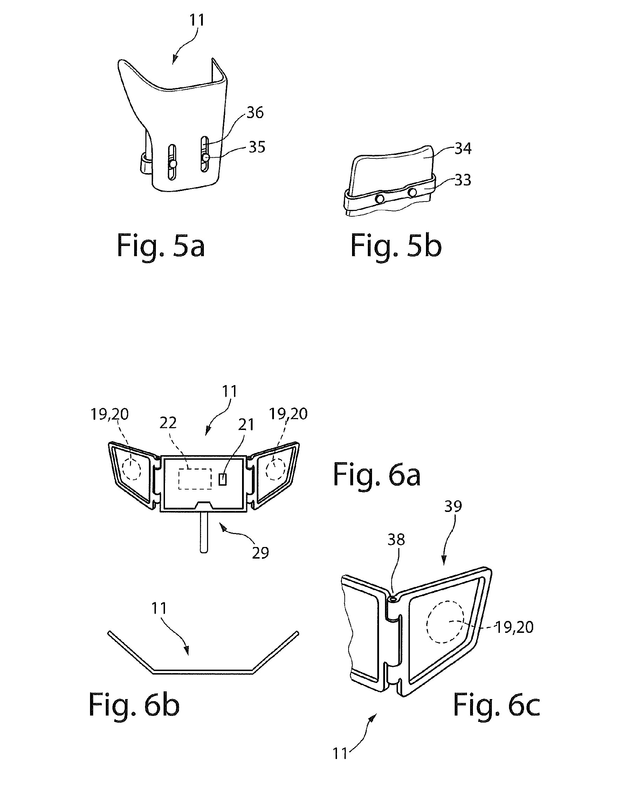

In den Figuren 5a und 5b ist eine weitere alternative Ausgestaltung zur Befestigung des Akustikmoduls 11 zu Figur 4 dargestellt. Beispielsweise ist eine Befestigungsmanschette mit zwei Steckbolzen 35 vorgesehen, welche jeweils in eine Langlochausnehmung 36 am Körper des Akustikmoduls 11 angreifen, so dass dieses Akustikmodul 11 an einer Rückenlehne 34 eines Stuhls befestigbar und individuell in der Höhe einstellbar ist. Das Akustikmodul 11 gemäß Figur 2 ist dabei derart angepasst, dass ein verlängerter Rückenabschnitt zur Aufnahme der Langlochöffnungen 36 gegeben ist.

In den Figuren 6a bis 6c ist eine weitere alternative Ausführungsform zu Figur 2 dargestellt. Die Figur 6a zeigt eine perspektivische Ansicht des Akustikmoduls 11. Figur 6b zeigt eine Ansicht von oben, und Figur 6c zeigt eine schematisch vergrößerte Ansicht eines Scharnieres 38 für eine schwenkbare Anordnung von Abschnitten 39 des Grundkörpers 12.

Bei dieser Ausführungsform besteht der flächenförmige Grundkörper 12 beispielsweise aus drei einzelnen Rahmen, die über Scharniere 38 schwenkbar miteinander verbunden sind. In den Abschnitten 38 sind bevorzugt das zumindest eine Mikrofon 20 und der zumindest eine Lautsprecher 19 angeordnet. Die Abschnitte 39 können benutzerspezifisch auf einen Abstand zum Kopf beziehungsweise Ohr eingestellt werden. Im Übrigen gelten die Ausführungen zu den vorher beschriebenen Ausführungsformen.

Diese vorbeschriebenen Akustikmodule weisen somit den Vorteil auf, dass diese flexibel einsetzbar und körpernah zum Benutzer vorgesehen sind, jedoch nicht direkt am Körper des Nutzers anliegen. Dadurch bestehen insbesondere gegenüber der gemeinsamen Nutzung von Arbeitsplätzen und/oder Tischtelefonen hygienische Vorteile. Darüber hinaus kann die akustische Gesamtsituation einer Büroumgebung verbessert werden. Zudem kann durch die Ausbildung des Akustikmoduls 11 die akustische und visuelle Privatheit des Nutzers verbessert werden.

Die vorbeschriebenen Ausführungsformen können in Arbeits- und Büroräumen, aber auch in Verkehrsmitteln, wie beispielsweise Zügen oder Flugzeugen, vorgesehen sein.

## Patentansprüche

1. Akustikmodul zur Schallabsorption und Verbesserung der Kommunikation, insbesondere in Arbeits- und Büroumgebungen,
- mit einem flächenförmigen Grundkörper (12), der zumindest eine schallabsorbierende Schicht umfasst,
- mit zumindest einem an oder in dem Grundkörper angeordneten Mikrofon (20) und Lautsprecher (19), die mit einer Steuerungseinrichtung (22) verbunden sind,
- mit einer am Grundkörper (14) vorgesehenen Schallabsorptionsebene (25), die trennwandähnlich ausgebildet und zum Kopf des Nutzers ausrichtbar ist.

2. Akustikmodul nach Anspruch 1, **dadurch gekennzeichnet, dass** die schallabsorbierende Schicht als Kern (17) und/oder Außenhülle (16) ausgebildet ist.

3. Akustikmodul nach Anspruch 1, **dadurch gekennzeichnet, dass** der Grundkörper (12) von einer schalldurchlässigen Außenhülle (16) umgeben ist.

4. Akustikmodul nach Anspruch 1, **dadurch gekennzeichnet, dass** der zumindest eine Lautsprecher (19) und/oder das zumindest eine Mikrofon (20) in oder auf der Schallabsorptionsebene (25) vorgesehen sind.

5. Akustikmodul nach Anspruch 1, **dadurch gekennzeichnet, dass** der Lautsprecher (19) und das Mikrofon (20) als eine Einheit vorgesehen sind oder dass der Lautsprecher (19) und das Mikrofon (20) getrennt zueinander angeordnet sind und das zumindest eine Mikrofon (20) einem Mund des Benutzers und der zumindest eine Lautsprecher (19) einem Ohr des Benutzers zugeordnet sind.

6. Akustikmodul nach einem der vorhergehenden Ansprüche, **dadurch gekennzeichnet, dass** die Steuerungseinrichtung (20) ein Funkmodul zur drahtlosen Kommunikation mit einer Datenverarbeitungseinrichtung, insbesondere einem PC, Notebook oder Tablet, oder mit einem Tisch- oder Mobilfunktelefon aufweist.

7. Akustikmodul nach einem der vorhergehenden Ansprüche, **dadurch gekennzeichnet, dass** das zumindest eine Mikrofon (20) als Richtmikrofon ausgebildet ist und die Steuerungseinrichtung das zumindest eine Mikrofon für eine Auslegung des Sprachfrequenzbereichs und einer Nahbesprechung ansteuert.

8. Akustisches Modul nach einem der vorhergehenden Ansprüche, **dadurch gekennzeichnet, dass** der Grundkörper (12) zumindest ein Bedienelement (21) zur Ansteuerung der Steuerungseinrichtung (22) aufweist.

9. Akustikmodul nach einem der vorhergehenden Ansprüche, **dadurch gekennzeichnet, dass** der flächenförmige Grundkörper (12) Akkumulatoren (31), Solarzellen oder beides aufweist.

10. Akustikmodul nach einem der vorhergehenden Ansprüche, **dadurch gekennzeichnet, dass** der Grundkörper (12) einen Rahmen (14), eine Gitterstruktur und/oder einen Wabentragkörper umfasst.

11. Akustikmodul nach einem der vorhergehenden Ansprüche, **dadurch gekennzeichnet, dass** das als schallabsorbierende Außenhülle (16) Textilfasern oder Faserdämmmaterialien vorgesehen sind.

12. Akustikmodul nach einem der vorhergehenden Ansprüche, **dadurch gekennzeichnet, dass** im Rahmen (14) des Grundkörpers (12) ein offenporiger Schaum, Materialien mit Mikroperforationen oder Faserdämmmaterialien vorgesehen sind, oder die Zwischenräume der Gitterstruktur und/oder Wabentragkörper mit einem schallabsorbierenden Material ausgebildet sind und den Kern (17) bilden.

13. Akustikmodul nach einem der vorhergehenden Ansprüche, **dadurch gekennzeichnet, dass** an dem flächenförmigen Grundkörper (12) zumindest ein Befestigungselement (29) zur lösbaren Anbindung an einem Mobiliar oder zur Aufnahme an einer Nackenstütze, einer Rückenlehne (34) oder einer Armlehne (27) vorgesehen ist.

14. Akustikmodul nach einem der vorhergehenden Ansprüche, **dadurch gekennzeichnet, dass** der Grundkörper (12) eine auf eine Kopfgröße des Nutzers angepasste Höhe aufweist.

15. Akustikmodul nach einem der vorhergehenden Ansprüche, **dadurch gekennzeichnet, dass** der Grundkörper (12) einen vorderen schmäleren Bereich (18) als einen hinteren Bereich (23) aufweist.

16. Akustikmodul nach einem der vorhergehenden Ansprüche, **dadurch gekennzeichnet, dass** der Grundkörper (12) einen zu seiner Längsachse symmetrischen Aufbau aufweist und der zumindest eine Lautsprecher (19) und das zumindest eine Mikrofon in der Längsachse liegen.

17. Akustikmodul nach einem der vorhergehenden Ansprüche, **dadurch gekennzeichnet, dass** der Grundkörper zumindest einen schwenkbaren Abschnitt (39) aufweist, in welchem der zumindest eine Lautsprecher (19) und das zumindest eine Mikrofon eingebaut ist und vorzugsweise zwei eine U-förmige Kontur bildende abschwenkbare Abschnitte (39) am Grundkörper (12) angeordnet sind.
